# EUROPÄISCHE PATENTSCHRIFT

(11) **EP 1 258 646 B1**
(45) Veröffentlichungstag und Bekanntmachung des Hinweises auf die Patenterteilung: **01.09.2004**
(21) Anmeldenummer: 02008915.7
(22) Anmeldetag: 22.04.2002
(51) Int. Cl.: F16D 59/02, F16D 55/28

(54) **Elektromagnetisch lüftbare Federkraftbremse mit mehreren Lüftungsmagneten**
Electromagnetically released spring brake with a plurality of release magnets
Frein à ressort désserré électromagnétiquement avec plusieurs aimants de désserrage

(30) Priorität: 20.04.2001 DE 10119636
(43) Veröffentlichungstag der Anmeldung: 20.11.2002
(73) Patentinhaber: Lenze Drive Systems GmbH, 31855 Aerzen (DE)
(72) Erfinder: Brendler, Matthias, Dr.-Ing., 31787 Hameln (DE); Menzel, Eckard, Dr.-Ing., 32457 Porta-Westfalica (DE)
(74) Vertreter: Elbertzhagen, Otto, Dipl.-Ing.

(56) Entgegenhaltungen:
- EP-A- 0 790 429
- DE-C- 3 424 595
- DE-U- 8 701 790
- DE-U- 29 510 168

## Beschreibung

Die Erfindung bezieht sich auf eine elektromagnetisch lüftbare Federkraftbremse der im Gattungsbegriff des Patentanspruchs 1 bezeichneten Art.

Eine solche Federkraftbremse ist aus der Druckschrift DE 34 24 595 C2 bekannt. Dort sind die einzelnen elektrischen Erregerspulen in topfförmige Aufnahmen eines einheitlichen Magnetblocks eingesetzt. Die Eisenkreise der dadurch gebildeten einzelnen Elektromagnete bestehen jeweils aus einem zylindrischen Innenpol und einem die Erregerspulen umgebenden gemeinsamen Außenpol. Die Ankerscheibe der bekannten Federkraftbremse ist in voneinander unabhängig bewegliche Segmente unterteilt, wobei jedes der Segmente einem der Elektromagnete zugeordnet ist. Die mechanischen Druckfedern sind in Bohrungen sowohl koaxial in den Innenpolen als auch verteilt im Außenpol angeordnet, wobei die Verteilung der Druckfedern an die Segmentierung der in radialer Richtung geteilten Ankerscheibe angepaßt ist. Damit soll erreicht werden, daß die auf den Bremsrotor wirkende Federkraft stufenweise in segmentbezogenen Federgruppen gesteuert werden kann, deren Bremswirkung durch Zuschaltung oder Abschaltung der einzelnen Elektromagnete variiert werden kann.

Eine Federkraftbremse ähnlicher Bauart ist in dem Gebrauchsmuster DE 87 01 790 U1 beschrieben. Hier sind separate, topfförmig ausgeprägte Elektromagnete zu einem Magnetteil zusammengefaßt und jeder Elektromagnet des Magnetteils verfügt über einen eigenen, ringförmigen Außenpol und eine ihm zugeordnete Ankerscheibe. Die zur Aufbringung der Bremskraft notwendigen Druckfedern sind koaxial in Bohrungen des Innenpols der einzelnen Elektromagnete eingesetzt. Die einzelnen Ankerscheiben wirken auf eine gemeinsame Reibscheibe, deren resultierendes Reibmoment durch das separate Ansteuern der einzelnen Elektromagnete dosiert werden kann. Die ungeteilte Fläche der Reibscheibe soll eine Fräswirkung der Ankerscheiben am Bremsrotor als Reibpartner vermeiden.

Der Erfindung liegt die Aufgabe zugrunde, eine Federkraftbremse der gattungsgemäßen Art zu schaffen, die als leistungsoptimierte, einstufige Federkraftbremse ausgebildet ist und einen vereinfachten Aufbau hat.

Diese Aufgabe wird bei einer Federkraftbremse der gattungsbildenden Art nach der Erfindung durch die kennzeichnenden Merkmale des Patentanspruchs 1 gelöst.

Für die Erfindung ist wesentlich, daß der Magnetkreis der Federkraftbremse mehrere Pol- und Spulenpaare aufweist, wobei sich die Induktion jeweils eines Spulenpaares bei entgegengesetzter elektrischer Polung addiert. Einen die Erregerspulen umgebenden Außenpol gibt es bei der neuen Bremse nicht. Der Eisenkreis des Magnetteils ist für alle Polpaare, die jeweils durch einen der Elektromagneten gebildet sind, zwischen der Bodenplatte und der Ankerscheibe aufgebaut. So besteht neben den Elektromagneten zwischen der Bodenplatte und der Ankerscheibe ein Zwischenraum, in welchem vorzugsweise mehrere Druckfedern optimal plaziert werden können. Die einzelnen Erregerspulen der Elektromagnete können bei der neuen Federkraftbremse in Gruppen oder gemeinsam geschaltet werden, dies dient allein dem Zweck, das Lüften der Bremse und das Halten der Ankerscheibe optimal zu steuern, es geht hierbei nicht darum, das Bremsmoment durch das gezielte Ein- und Ausschalten einzelner Erregerspulen zu verändern. Auch die geometrische Anordnung der Elektromagnete kann für die Steuerung der Ankerscheibe speziell ausgewählt werden, so ist sowohl eine drehsymmetrische als eine unsymmetrische Anordnung möglich.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:

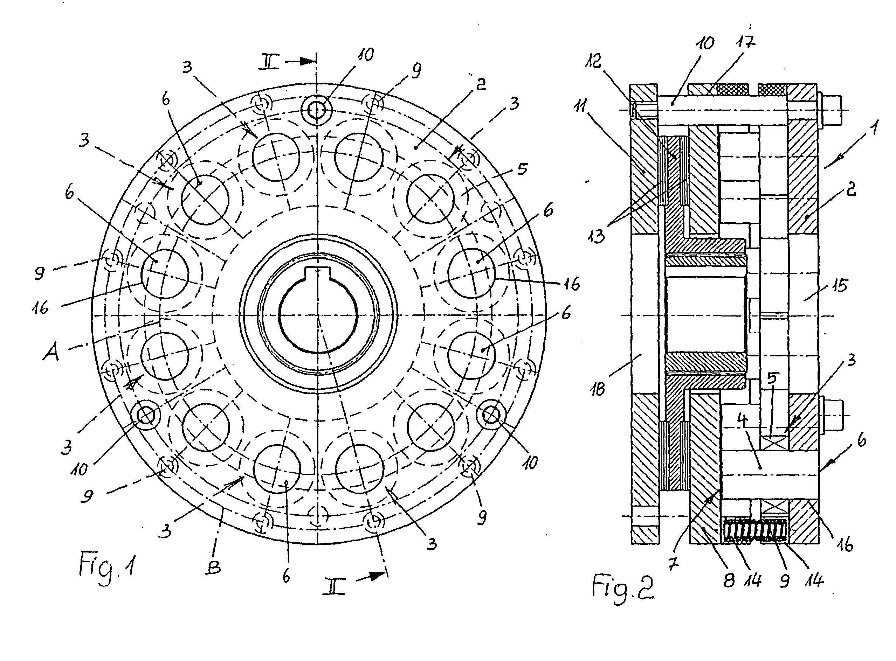

- Fig. 1: die Stirnansicht einer elektromagnetisch lüftbaren Federkraftbremse, und zwar auf das rückwärtige Magnetteil gesehen, und
- Fig. 2: einen Radialschnitt durch die Federkraftbremse nach Fig. 1 entlang der Linie II-II.

Im einzelnen weist die in der Zeichnung dargestellte Federkraftbremse ein Magnetteil 1 auf, das als tragendes Element eine ferromagnetische, zweckmäßig aus Stahl bestehende Bodenplatte 2 hat. Bei der Bodenplatte 2 handelt es sich um eine kreisrunde Scheibe mit einer zentralen Durchgangsöffnung 15 für einen Wellendurchtritt.

An der Innenseite der Bodenplatte 2 ist eine Mehr- oder Vielzahl einzelner Elektromagnete 3 angeordnet. Die Elektromagnete 3 in drehsymmetrischer Anordnung liegen auf einem gemeinsamen Teilkreis A, der konzentrisch zur Bremsenachse ist. Grundsätzlich können die Elektromagnete 3 auch anders angeordnet werden, indem sie zu Zweier- oder Dreiergruppen zusammengefaßt werden, die in Abständen voneinander auf einem gemeinsamen Kreis angeordnet sind. Auch hierbei ergibt sich noch eine drehsymmetrische Anordnung. Grundsätzlich ist auch eine unsymmetrische Anordnung der Elek-tromagnete 3 möglich, ebenso können die Elektromagnete 3 auf zwei Teilkreisen beispielsweise verteilt sein.

Jeder der Elektromagnete 3 hat einen stabförmigen Eisenkern 4, der nach Art eines Stehbolzens fest in entsprechende Bohrungen 16 der Bodenplatte 2 eingesetzt ist. Auf dem stabförmigen Eisenkern 4 ist eine Erregerspule 5 angeordnet, die in dem an die Innenseite der Bodenplatte 2 angrenzenden Innenraum freiliegt. Jeder der Elektromagnete 3 stellt mit seinem Eisenkern 4 für sich ein Polpaar dar, welches entsprechend ein erstes Polende 6 und ein zweites Polende 7 hat. Das erste Polende 6 des Eisenkerns 4 der Elektromagnete 3 liegt mit seiner Stirnseite flächenbündig mit der Außenseite der Bodenplatte 2. Das zweite Polende 7 bildet mit seiner Stirnseite eine Anschlagfläche für eine Ankerscheibe 8, die bei Bestromung der Erregerspulen 5 der Elektromagnete 3 zum Magnetteil 1 hin angezogen wird und entsprechend in Axialrichtung verschieblich gelagert ist.

Die Ankerscheibe 8 ist ständig von Druckfedern 9 beaufschlagt, die auf einem äußeren Teilkreis B nahe dem Umfang der Ankerscheibe 8 und der Bodenplatte 2 angeordnet sind und sich mit ihrem einen Ende an der Bodenplatte 2 abstützen. Die Ankerscheibe 8 und die Bodenplatte 2 haben den gleichen Durchmesser, und so können bei diesen beiden Teilen die Druckfedern 9 in radialer Richtung soweit wie möglich nach außen hin angeordnet werden. Demgegenüber sind die Elektromagnete 3 in radialer Richtung weiter nach innen hin angeordnet, entsprechend hat der Teilkreis A der Elektromagnete 3 einen kleineren Radius als der Teilkreis B der Druckfedern 9. Einander koaxial gegenüberliegende Führungselemente 14 in Gestalt von Hülsen sind an den einander gegenüberliegenden Innenseiten der Bodenplatte 2 und der Ankerscheibe 8 zur Aufnahme je einer der Druckfedern 9 vorgesehen. Auf diese Weise sind zwischen der Bodenplatte 2 und der Ankerscheibe 8 trotz deren axialer Verschieblichkeit die Druckfedern 9 formschlüssig in ihrer Lage gesichert. Statt der Hülsen als Führungselemente 14 können auch Mulden, Sacklöcher oder dergleichen an den Innenseiten der Bodenplatte 2 und der Ankerscheibe 8 vorgesehen werden.

Neben den Elektromagneten 3 und den Druckfedern 9 ist im Zwischenraum zwischen den Innenseiten der Ankerscheibe 8 und der Bodenplatte 2 noch genügend Platz für den Durchtritt von Bolzen 10, die miteinander achsparallel angeordnet sind und über die ein feststehendes Widerlager 11 mit der Bodenplatte 2 fest verbunden ist. Auch das Widerlager 11 ist in Form einer kreisrunden Scheibe gestaltet, die den gleichen Durchmesser wie die Bodenplatte 2 und die Ankerscheibe 8 hat, ebenso weist das Widerlager 11 eine zentrale Durchgangsöffnung 18 für den Wellendurchtritt auf. Die Bodenplatte 2 und das Widerlager 11 sind miteinander koaxial und bei entsprechender planparalleler Ausführung miteinander parallel.

Die Ankerscheibe 8 ist auf den Bolzen 10 axialbeweglich geführt und dazu mit entsprechenden Durchgangsbohrungen 17 versehen. Zwischen der Ankerscheibe 8 und dem Widerlager 11 findet sich ein Bremsrotor 12, der an beiden Stirnseiten Reibbeläge 13 hat, die mit der vom Magnetteil 1 abgewandten Außenseite der Ankerscheibe 8 und mit der Innenseite des Widerlagers 11 zusammenwirken.

In Einbaulage ist der Rotor 12 mit einer durch die Bremse hindurchgehenden Welle drehfest verbunden, zudem ist er in gleicher Weise wie die Ankerscheibe 8 in axialer Richtung verschieblich. So kann der Rotor 12 über die auf die Ankerscheibe 8 wirkenden Druckfedern 9 zwischen der Außenseite der Ankerscheibe 8 und der Innenseite des Widerlagers 11 verspannt werden, womit die gewünschte Bremswirkung auf den Bremsrotor 12 ausgeübt wird.

Die Bremskraft der mechanischen Druckfedern 9 kann durch die Magnetkraft der Elektromagnete 3 überwunden werden, bei entsprechender Erregung über die Erregerspulen 5 rückt die Ankerscheibe 8 vom Bremsrotor 3 ab, womit das Anpressen des Bremsrotors 12 gegen das Widerlager 11 aufgehoben wird.

Der magnetische Kreis schließt sich bei erregten Elektromagneten 3 ausgehend von dem einen Polende 6 der Eisenkerne 4 der Elektromagnete 3 über die Bodenplatte 2, über den jeweils nächstbenachbarten Eisenkern 4 des betreffenden Elektromagneten 3 und über die Ankerscheibe 8 zurück zum zweiten Polende 7 des jeweiligen Elektromagneten 3. Dies setzt voraus, daß die einander benachbart liegenden Elektromagnete 3 einander entgegengesetzt magnetisch gepolt sind, was durch eine entsprechende Beschaltung der Erregerspulen 5 vorgesehen wird.

## Patentansprüche

1. Elektromagnetisch lüftbare Federkraftbremse mit einem Magnetteil und mit einer relativ dazu axial beweglichen Ankerscheibe (8), die von einer oder mehreren am Magnetteil abgestützten Druckfedern (9) in Richtung vom Magnetteil weg beaufschlagt ist, ferner mit einem mit der Ankerscheibe koaxialen Bremsrotor, der auf der vom Magnetteil abliegenden Seite der Ankerscheibe (8) angeordnet und unter Mitnahme durch die Ankerscheibe (8) axial gegen ein feststehendes Widerlager preßbar ist, das auf der von der Ankerscheibe (8) wegliegenden Seite des Bremsrotors sich befindet, wobei das Magnetteil eine Mehrzahl von achsparallel angeordneten Elektromagneten (3) mit je einer Erregerspule (5) aufweist,
**dadurch gekennzeichnet,**
**daß** die Ankerscheibe (8) einstückig ist und jeder Elektromagnet (3) einen stabförmigen Eisenkern (4) hat, auf dem die zugehörige Erregerspule (5) sitzt und dessen erstes Polende (6) fest mit einer ferromagnetischen Bodenplatte (2) ist und dessen zweites Polende (7) eine Anschlagfläche für die Ankerscheibe (8) bildet und daß bei Bestromung der Erregerspulen (5) die Eisenkerne (4) der jeweils einander benachbarten Elektromagnete (3) eine zueinander entgegengesetzte magnetische Polung haben.

2. Federkraftbremse nach Anspruch 1,
**dadurch gekennzeichnet,**
**daß** die Eisenkerne (4) der Elektromagnete (3) nach Art von Stehbolzen in die Bodenplatte (2) eingesetzt sind.

3. Federkraftbremse nach Anspruch 1 oder 2,
**dadurch gekennzeichnet,**
**daß** die Elektromagnete (3) auf zumindest einem Teilkreis (A) konzentrisch zur Bremsenachse angeordnet sind.

4. Federkraftbremse nach einem der Ansprüche 1 - 3,
**dadurch gekennzeichnet,**
**daß** die Erregerspulen (5) der Elektromagnete (3) im Zwischenraum zwischen der Bodenplatte (2) und der Ankerscheibe (8) freiliegend angeordnet sind.

5. Federkraftbremse nach einem der Ansprüche 1 - 4,
**dadurch gekennzeichnet,**
**daß** mehrere Druckfedern (9) zwischen der Bodenplatte (2) und der Ankerscheibe (8) vorhanden und daran mittels formschlüssiger Führungselemente (14) lagegesichert sind.

6. Federkraftbremse nach Anspruch 5,
**dadurch gekennzeichnet,**
**daß** die Führungselemente (14) Hülsen sind, die axial miteinander fluchtend an der Bodenplatte (2) sowie an der Ankerscheibe (8) angeordnet sind.

7. Federkraftbremse nach Anspruch 5 oder 6,
**dadurch gekennzeichnet,**
**daß** die Druckfedern (9) auf zumindest einem Teilkreis (B) konzentrisch zur Bremsenachse angeordnet sind.

8. Federkraftbremse nach Anspruch 7,
**dadurch gekennzeichnet,**
**daß** der Teilkreis (B) der Druckfedern (9) nahe dem Außenumfang der Bodenplatte (2) und der Ankerscheibe (8) liegt und demgegenüber der Teilkreis (A) der Elektromagnete (3) einen kleineren Radius hat.

9. Federkraftbremse nach einem der Ansprüche 1 - 8,
**dadurch gekennzeichnet,**
**daß** die Bodenplatte (2) ebenfalls eine kreisrunde Scheibe ist und den gleichen Durchmesser wie die Ankerscheibe (8) hat.

10. Federkraftbremse nach Anspruch 9,
**dadurch gekennzeichnet,**
**daß** das Widerlager (11) gleichfalls eine kreisrunde Scheibe ist, die den gleichen Durchmesser wie die Bodenplatte (2) und die Ankerscheibe (8) hat.

11. Federkraftbremse nach einem der Ansprüche 1 - 10,
**dadurch gekennzeichnet,**
**daß** das Widerlager (11) mittels achsparalleler Bolzen (10) mit der Bodenplatte (2) verbunden und auf diesen Bolzen (10) die Ankerscheibe (8) geführt ist.

## Claims

1. Electromagnetically released spring brake with a magnetic part and an armature disc (8) which is movable axially relative thereto and which is loaded by one or more compression springs (9) supported on the magnetic part in a direction away from the magnetic part, furthermore with a brake rotor which is coaxial with the armature disc and which is mounted on the side of the armature disc (8) remote from the magnetic part and can be pressed when entrained by the armature disc (8) axially against a fixed abutment which is located on the side of the brake rotor remote from the armature disc (8) wherein the magnetic part has a number of electromagnets (3) arranged axially parallel and each with an exciter coil (5)
**characterised in that**
the armature disc (8) is in one piece and each electromagnet (3) has a rod-shaped iron core (4) on which the associated exciter coil (5) is seated and whose first pole end (6) is fixed to a ferro-magnetic base plate (2) and whose second pole end (7) forms a stop face for the armature disc (6) and that when the exciter coils (5) are energised the iron cores (4) of the relevant adjoining electromagnets (3) have opposite magnetic polarity.

2. Spring brake according to claim 1,
**characterised in that**
the iron cores (4) of the electromagnets (3) are inserted in the base plate (2) in the manner of studs.

3. Spring brake according to claim 1 or 2,
**characterised in that**
the electromagnets (3) are mounted on at least part of a circle (A) concentric with the brake axis.

4. Spring brake according to one of claims 1 to 3,
**characterised in that**
the exciter coils (5) of the electromagnets (3) are arranged free in the interspace between the base plate (2) and the armature disc (8).

5. Spring brake according to one of claims 1 to 4,
**characterised in that**
several compression springs (9) are present between the base plate (2) and the armature disc (8) and are secured in position thereon by means of positive locking guide elements (14).

6. Spring brake according to claim 5,
**characterised in that**
the guide elements (14) are sleeves which are arranged axially aligned with each other on the base plate (2) as well as on the armature disc (8).

7. Spring brake according to claim 5 or 6,
**characterised in that**
the compression springs (9) are mounted on at least a pitch circle (B) concentric with the brake axis.

8. Spring brake according to claim 7,
**characterised in that**
the pitch circle (B) of the compression springs (9) lies close to the external circumference of the base plate (2) and the armature disc (8), and the pitch circle (A) of the electromagnets (3) has a smaller radius than that of the compression springs.

9. Spring brake according to one of claims 1 to 8,
**characterised in that**
the base plate (2) likewise is a circular round disc and has the same diameter as the armature disc (8).

10. Spring brake according to claim 9,
**characterised in that**
the abutment (11) likewise is a circular round disc which has the same diameter as the base plate (2) and the armature disc (8).

11. Spring brake according to one of claims 1 to 10,
**characterised in that**
the abutment (11) is connected to the base plate (2) by means of axially parallel bolts (10) and the armature disc (8) is guided on these bolts (10).

## Revendications

1. Frein à ressort à desserrage électromagnétique avec une pièce magnétique et avec une plaque d'armature (8) mobile dans le sens axial par rapport à lui, laquelle plaque d'armature (8) est asservie, dans le sens opposé à la pièce magnétique, à un ou plusieurs ressorts de pression (9), prenant appui sur ladite pièce magnétique, en outre avec un rotor de frein qui, coaxial avec la plaque d'armature, est disposé sur le côté de la plaque d'armature (8) opposé à la pièce magnétique et peut être entraîné par ladite plaque d'armature (8) et pressé, dans le sens axial, une butée fixe qui est située sur le côté dudit rotor opposé de la plaque d'armature (8), la pièce magnétique présentant plusieurs électroaimants (3) disposés parallèlement à l'axe, avec chacun une bobine d'excitation (5),
**caractérisé en ce que**
la plaque d'armature (8) est formée d'une seule pièce et que chaque électroaimant (3) est pourvu d'un noyau en fer en forme de barre (4), sur lequel est placée la bobine d'excitation associée (5), et dont la première extrémité polaire (6) est reliée fixement à une plaque de base ferromagnétique (2) et dont la deuxième extrémité polaire (7) forme une surface de butée pour la plaque d'armature (8), et que lors de la mise sous courant des bobines d'excitation (5), les noyaux en fer (4) des électroaimants (3) voisins présentent une polarité magnétique inverse.

2. Frein à ressort selon la revendication 1,
**caractérisé en ce que**
les noyaux en fer (4) des électroaimants (3) sont mis en place dans la plaque de base (2) à la manière de boulons d'entretoisement.

3. Frein à ressort selon la revendication 1 ou 2,
**caractérisé en ce que**
les électroaimants (3) sont disposés au moins sur un cercle de référence (A), concentriquement par rapport à l'axe du frein.

4. Frein à ressort selon l'une des revendications 1 à 3,
**caractérisé en ce que**
les bobines d'excitation (5) des électroaimants (3) sont disposés à l'état libre entre la plaque de base (2) et l'induit (8).

5. Frein à ressort selon l'une des revendications 1 à 4,
**caractérisé en ce que**
plusieurs ressorts de pression (9) sont présents entre la plaque de base (2) et la plaque d'armature (8) et y sont positionnés de manière fiable, à l'aide d'éléments de guidage à engagement géométrique.

6. Frein à ressort selon la revendication 5,
**caractérisé en ce que**
les éléments de guidage (14) sont des manchons qui, disposés dans le sens axial, affleurent la plaque de base (2) ainsi que la plaque d'armature (8).

7. Frein à ressort selon la revendication 5 ou 6,
**caractérisé en ce que**
les ressorts de pression (9) sont disposés concentriquement par rapport à l'axe du frein, sur au moins un cercle de référence (B).

8. Frein à ressort selon la revendication 7,
**caractérisé en ce que**
le cercle de référence (B) des ressorts de pression (9) est situé à proximité de la périphérie de la plaque de base (2) et de la plaque d'armature (8) et présente un rayon plus petit que celui du cercle de référence (A) des électroaimants (3).

9. Frein à ressort selon l'une des revendications 1 à 8,
**caractérisé en ce que**
la plaque de base (2) est également circulaire et présente le même diamètre que la plaque d'armature (8).

10. Frein à ressort selon la revendication 9,
**caractérisé en ce que**
la butée (11) est également une plaque circulaire qui présente le même diamètre que la plaque de base (2) et que la plaque d'armature (8).

11. Frein à ressort selon l'une des revendications 1 à 10,
**caractérisé en ce que**
la butée (11) est reliée à la plaque de base (2) à l'aide de boulons (10) parallèles à l'axe et que la plaque d'armature (8) est mobiles sur lesdits boulons (10).
